Europäisches Patentamt

European Patent Office

Office européen des brevets

(19)

(11) Veröffentlichungsnummer: **0 188 280**
**A2**

(12) # EUROPÄISCHE PATENTANMELDUNG

(21) Anmeldenummer: **86100441.4**

(22) Anmeldetag: **15.01.86**

(51) Int. Cl.⁴: **B 60 P 1/64**

(30) Priorität: 15.01.85 DE 3501107

(43) Veröffentlichungstag der Anmeldung:
**23.07.86** Patentblatt **86/30**

(84) Benannte Vertragsstaaten:
**AT BE CH DE FR GB IT LI LU NL SE**

(71) Anmelder: **Paul, Josef**
**An der alten Schmiede 1**
**D-8358 Vilshofen(DE)**

(72) Erfinder: **Paul, Josef**
**An der alten Schmiede 1**
**D-8358 Vilshofen(DE)**

(74) Vertreter: **Patentanwälte Czowalla . Matschkur +**
**Partner**
**Dr.-Kurt-Schumacher-Strasse 23 Postfach 9109**
**D-8500 Nürnberg 11(DE)**

(54) **Nutzfahrzeug mit Schieberahmenwechselaufbau.**

(57) Nutzfahrzeug mit einem zur Aufnahme eines wechselbaren Aufbaus (Container) dienenden, gegenüber dem Fahrzeugrahmen um seine Hinterkante schwenkbar gelagerten Kipprahmen, der einen gegenüber einem unteren Trägerrahmen längsverschiebbaren, eine Gleitrampe bildenden Schieberahmen mit einem mit einer Antriebsvorrichtung versehenen Schlitten mit einer hydraulischen Hubvorrichtung zum Absetzen, Überschieben und Aufnehmen des Aufbaus aufweist, wobei der Schieberahmen am hinteren Absetzende keilförmig ausläuft, derart, daß beim Aufnehmen des am vorderen Ende mittels der hydraulischen Hubvorrichtung angehobenen Aufbaus eine Berührung erst mit den hinteren Eckverschlüssen erfolgt.

EP 0 188 280 A2

./...

FIG. 10

Nutzfahrzeug mit Schieberahmenwechselaufbau

Die Erfindung bezieht sich auf ein Nutzfahrzeug mit einem zur Aufnahme eines wechselbaren Aufbaus (Container) dienenden, gegenüber dem Fahrzeugrahmen um seine Hinterkante schwenkbar gelagerten, Kipprahmen, der einen gegenüber einem unteren Trägerrahmen längsverschiebbaren, eine Gleitrampe bildenden Schieberahmen mit einem mit einer Antriebsvorrichtung versehenen Schlitten mit einer hydraulischen Hubvorrichtung zum Absetzen, Überschieben und Aufnehmen des Aufbaus aufweist.

Ein derartiges, aus der älteren Patentanmeldung P 33 29 677.4 bekanntgewordenes Nutzfahrzeug vermeidet durch die Verwendung der hydraulischen Hubvorrichtung die Schwierigkeiten, die bei ähnlichen Nutzfahrzeug-Konstruktionen dadurch auftraten, daß der am Boden stehende Aufbau mit Hilfe eines Seilzugs über die etwas erhöhte hintere Kante des in Kippstellung befindlichen und zum Boden hin ausgefahrenen Schieberahmens hochgezogen werden muß. Diese Art des Anhebens des Aufbaus mit einem Seilzug ist nämlich nur für relativ leichte Aufbauten geeignet, da beispielsweise schwere Container mit 20 und mehr Tonnen Gewicht auf diese Art und Weise nicht über die erhöhte Kante des schräggestellten Schieberahmens hochbefördert werden können.

Auch bei Verwendung der hydraulischen Hubvorrichtung zum Anheben des vorderen Behälterendes, um anschließend durch Verfahren des Schlittens den Behälter auf den Schieberahmen heraufzuziehen - resp. bei sehr schweren Containern den Schieberahmen samt dem Nutzfahrzeug unter den Behälter rückwärts zu ziehen - ergibt sich die Schwierigkeit, daß bereits bei einem teilweisen Heraufziehen des Containers auf den Schieberahmen der Containerboden auf der Hinterkante des Schieberahmens aufliegt und über diese weiter heraufgezogen wird. Sofern das vordere Ende des Containers nicht sehr weit angehoben worden ist, erfolgt dieses Aufliegen bereits im vorderen Drittel des Containers, wodurch zum einen erhebliche Kräfte durch das hinten überstehende Containerende bestehen, das dann zwangsweise vom Boden weggehoben wird, wobei diese Kippkräfte die Hydraulikvorrichtung und den Schlitten außerordentlich stark belasten. Darüber hinaus ergeben sich Stabilitätsprobleme, da diese starken Kräfte die Gefahr eines Abknickens des Bodens bewirken. Insbesondere bei Containeraufbauten ohne tragenden Boden, wie es beispielsweise bei Tankaufbauten der Fall ist, darf ein derartiger Bodenkontakt mit der Kante des Schieberahmens nicht stattfinden.

Um all diese Schwierigkeiten zu vermeiden, ist in Ausgestaltung der Erfindung nach der älteren Anmeldung gemäß der vorliegenden Erfindung vorgesehen, daß der Schieberahmen am hinteren Absetzende keilförmig ausläuft, derart, daß beim Aufnehmen des am vorderen Ende mittels der hydraulischen Hubvorrichtung angehobenen Aufbaus eine Berührung erst mit den hinteren Eckverschlüssen des Containers erfolgt. Durch den keilförmigen Auslauf des Schieberahmens kann das Schieberahmenende völlig flach am Boden aufliegen und es entsteht nicht der bei allen bisherigen Konstruktionen vorhandene Art Kniestock mit einer relativ hochliegenden Kante, über die der Container nach einem mehr oder weniger kurzen, nur einseitig auf seinem Hinterende abgestützten Verschiebeweg gezogen werden muß. Dies wiederum führt dazu, daß zum einen das vordere Containerende durch die hydraulische Hubvorrichtung nur sehr wenig angehoben zu werden braucht, um durch Verfahrung des Schlittens das Aufschieben des Containers auf den Schieberahmen zu bewerkstelligen. Noch entscheidender ist aber, daß auf diese Art und Weise sichergestellt ist, daß bei diesem Aufschieben der Boden des Containers nicht in Kontakt mit der Hinterkante des Schieberahmens gelangt, sondern dieser Kontakt erst im allerletzten Abschnitt des Containers im Bereich seiner hinteren Containereckverschlüsse stattfindet. In diesem Bereich ist zum einen kein Kippmoment mehr vorhanden, welches zu einem Zerbrechen des Containeraufbaus führen könnte. Zum anderen ist dort wegen der vorhandenen Querträger mit den Containereckverschlüssen in jedem Fall eine ausreichende Bodensteifigkeit vorhanden, die Beschädigungen des Containerbodens ausschließt.

Eine grundsätzliche Schwierigkeit aller vorhandenen Nutzfahrzeuge mit einem schräg ausfahrbaren Schieberahmen zum Wechseln eines Aufbaus besteht darin, daß die Neigung des Schieberahmens wegen der vorgegebenen Höhe des Fahrzeugrahmens und aufgrund der Tatsache, daß der Schieberahmen nur ein begrenztes Stück nach hinten über die Kante des Fahrzeugrahmens ausgefahren werden kann, relativ steil ist, wodurch das Heraufziehen des Containers (bzw. das Unterfahren des Containers durch das zurücklaufende Fahrzeug) sehr erschwert wird. Außerdem wäre ein weniger steiler Kippwinkel ladungsschonender.

Zwar läßt sich der Neigungswinkel des zum Boden hin ausgefahrenen Schieberahmens bereits durch dessen keilförmig auslaufendes hinteres Absetzende etwas abflachen, doch ist auch
dadurch nur eine graduelle Verbesserung der Situation möglich.
In weiterer Ausbildung der Erfindung ist daher vorgesehen, daß
der Kipprahmen eine gegenüber der Schwenkachse des Schieberahmens nach vorne versetzte zweite Schwenkachse aufweist
und daß die hintere Schwenkachse gegenüber ihrer oberen arretierbaren Normalstellung in eine untere Aufnahmestellung absenkbar ist.

Durch diese erfindungsgemäße Maßnahme erfolgt das Verschwenken
des Kipprahmens beim Ausfahren in die geneigte Auflagestellung
zum Boden zum Aufheben eines Containers nicht über die hintere
Schwenkachse, die beispielsweise dazu dient, den gesamten Aufbau nach Art eines Kippers hochschwenken zu können, um die
Schüttgutladung des Containers über eine hintere Klappe herausrutschen zu lassen, sondern um die zusätzliche, weiter nach
einwärts im Fahrzeug versetzte Schwenkachse. Dies wiederum bedeutet, daß der Neigungswinkel des ausgefahrenen Schieberahmens erheblich flacher ist, da am hinteren Fahrzeugende der
Schieberahmen nicht die Höhe des Fahrzeugrahmens mehr aufweist, sondern durch die Absenkung der hinteren Schwenkachse
eine um das Maß dieser Absenkung verringerte Höhe, was bei
gleicher Ausfahrlänge einen entsprechend flacheren Neigungswinkel garantiert.

Die zweite Schwenkachse kann dabei in Weiterbildung der Erfindung besonders einfach durch am Fahrzeugrahmen zwischen dem
Kippzylinder und der hinteren Schwenkachse gelagerte Stützrollen für den Schieberahmen gebildet sein. Beim Ankippen des
Kipprahmens - sofern dieser an beiden Schwenkachsen angelenkt
ist - mit Hilfe des Kippzylinders schwenkt bei entriegelter
Arretierung der hinteren Schwenkachse der Kipprahmen um
diese die zweite Schwenkachse bildenden Stützrollen, während
die hintere Schwenkachse nach unten gedrückt wird. Gleichzeitig mit der Kippbewegung oder im Anschluß daran, je nach der Auslegung der Steuerung, erfolgt die Längsverschiebung des Schieberahmens gegenüber dem Trägerrahmen des Kipprahmens bis zum Aufliegen des - nach wie vor selbstverständlich mit Rollen versehenen - keilförmigen hinteren Absetzendes auf dem Boden.

Das Ausmaß der Absenkung der hinteren Schwenkachse kann bei dieser Ausführungsform bevorzugt durch einen Anschlag des die hintere Schwenkachse gegenüber dem Fahrzeugrahmen abstützenden, vorzugsweise zwei ineinandergeführte Rohre umfassenden Verschiebegestänges begrenzt. Dies wiederum hat zur Folge, daß durch weiteres Ankippen des Kipprahmens mit ausgefahrenem Schieberahmen der Kipprahmen schließlich von der zusätzlichen zweiten Schwenkachse wieder abheben würde und die abgesenkte erste Schwenkachse dann wieder die gerade wirksame Schwenkachse bildet. Dies kann beispielsweise dann erforderlich sein, wenn durch Absenkung des Lagerorts des aufzunehmenden Containers gegenüber dem Standniveau des Fahrzeugs die Ausfahrbarkeit des flach geneigten Schieberahmens nicht ausreichen würde, um das hintere Absetzende auf den Boden gelangen zu lassen.

Die genannten beiden in Längsrichtung des Fahrzeugs gegeneinander versetzten Schwenkachsen können dabei in unterschiedlicher Weise ausgebildet sein. So ist es zum einen möglich, den Kipprahmen um die hintere Schwenkachse kippbar zu lagern, d.h. den Kipprahmen so lange auszugestalten, wie die gesamte Ladeplattform. Daneben ist es aber auch möglich und für viele Anwendungsfälle besonders zweckmäßig, den Kipprahmen verkürzt auszubilden und mit seinem hinteren Ende an der starren vorderen Schwenkachse anzulenken.

Dabei hat es sich weiter als zweckmäßig erwiesen, eine hydraulische Seileinzugsvorrichtung für den Kipprahmen vorzusehen, um bei hecklastigen Containern ein Wiederzurückziehen in die normale Auflagestellung zu erreichen, was mit den üblichen, nur auf Druck belastbaren, Ausfahrhydraulikzylindern bei besonders schweren hecklastigen Containern nur mit Schwierigkeiten erreicht werden könnte.

0188280

Mit besonderem Vorteil kann die Lagerung der hinteren Schwenkachse mit ausfahrbaren Stützrädern versehen sein. Dies hat den
Vorteil, daß auf diese Weise bei schweren Containern das Fahrzeug selbst beim Aufnehmen des Containers nach rückwärts rollend
sich selbst unter den Container zieht. Ohne die Rollen müßte
die Lagerung der hinteren Schwenkachse stützenfrei ausgeführt
sein, was bei besonders schweren Lasten ggfs. wiederum zu Stabilitätsproblemen führen könnte.

Eine weitere Ausgestaltung der Erfindung sieht eine besondere
Ausbildung der hydraulischen Hubvorrichtung vor, die zwar
sehr vorteilhaft in Verbindung mit der besonderen Ausbildung
des Kipprahmens und seines Schieberahmens verwendet werden
kann, jedoch auch bei anderen, insbesondere den herkömmlichen
Typen von Kipprahmen für solche Wechselaufbauten, mit Vorteil
eingesetzt werden kann. Hierzu ist erfindungsgemäß vorgesehen,
daß die hydraulische Hubvorrichtung eine Hubschwinge mit einem
Querträger umfaßt, an dem hydraulisch längsverstellbare, von
außen in Öffnungen der Containereckverschlüsse eingreifende
Greiforgane gelagert sind.

Durch das Vorsehen einer derartigen Hubschwinge ist allein
aufgrund der sowieso vorhandenen Containereckverschlüsse ein
Ergreifen und Hochheben des Containers möglich, ohne daß,
wie es bei vielen vorbekannten Vorrichtungen der Fall war,
die Container speziell für die Aufnahmevorrichtung am Nutzfahrzeug ausgerüstet zu werden brauchen. Die Hubschwinge ermöglicht aufgrund ihrer wenigstens um zwei zueinander senkrechte Achsen möglichen Schwenkbarkeit auch bei verkippter
Lagerung des Containers sowie bei nicht fluchtender Achsrichtung des Fahrzeugs und des Containers ein Einhaken der Greiforgane in die Containereckverschlüsse. Dies ist für die praktische Anwendung von extremer Bedeutung, da insbesondere die Ausrichtung der Längsachsen von Container und Fahrzeug selbst von
bestqualifizierten Fahrern niemals erreicht werden kann. In manchen Fällen besteht darüber hinaus auch die mißliche Lage, daß aufgrund der örtlichen Verhältnisse eine solche fluchtende Ausrichtung überhaupt nicht möglich ist.

Neben der von der Beweglichkeit her gesehen optimalen kardanischen Schwenklagerung der Hubschwinge an einer Tragvorrichtung auf dem Schlitten, wobei die Lagerung in jedem Fall arretierbar sein sollte, hat es sich bei umfangrichen Versuchen als für die Praxis völlig ausreichend, und konstruktiv sehr viel einfacher erwiesen, wenn die in einer Ebene senkrecht zur Längsachse des Schieberahmens schwenkbar gelagerte, durch hydraulische Stellzylinder in ihrer Mittelebene feststellbare Hubschwinge am oberen Ende an einem parallel zur Längsachse des Schieberahmens ausfahrbaren, im Aufbau des Schlittens angeordneten, Hydraulikkolben gelagert ist, wobei nur der Querträger kardanisch unten am Tragarm der Hubschwinge gelagert ist.

Diese einfache robuste Konstruktion ermöglicht darüber hinaus eine sehr einfache Erweiterung des Einsatzbereichse einer solchen hydraulischen Hubvorrichtung, indem sie nämlich durch die Verlagerung der wesentlichen Bewegungsfunktionen in die Tragvorrichtung der Hubschwinge auf dem Schlitten ein Ersetzen der lösbar an der Tragvorrichtung des Schlittens gelagerten Hubschwinge durch einen Hakenarm zur Aufnahme von Schuttcontainern od.dgl.* gestattet. Damit läßt sich relativ problemlos eine erfindungsgemäße Vorrichtung durch bloßen Austausch der Hubschwinge gegenüber einem anderen Greifarm zur Aufnahme praktisch beliebiger Wechselaufbauten umrüsten.

Schließlich liegt es auch noch im Rahmen der Erfindung, am Ende des Schieberahmens hydraulisch querverstellbare Platten zum Geraderichten des hinteren Containerendes vorzusehen. Durch die praktische Unmöglichkeit des exakten Ausrichtens der Längsachsen des Fahrzeugs zur Längsachse des abgestellten Containers ergibt sich nämlich grundsätzlich die mißliche Tatsache, daß der Container nach dem Heraufziehen auf den

*nach DIN 14505 u. 30722

Kipprahmen mit seinem hinteren Ende gegenüber der ausgerichteten Stellung mindestens um einige Zentimeter seitlich verschoben ist, so daß die Eckverschlüsse nicht ineinander eingreifen können. Durch die relativ einfache hydraulisch verstellbaren Ausricht-Platten kann diese Justierung zur Verriegelung des Containers auf dem Kipprahmen sehr einfach erreicht werden.

In Weiterbildung der Erfindung kann anstelle der vorstehend beschriebenen hydraulischen Hubvorrichtung mit einer Hubschwinge eine Anordnung vorgesehen sein, bei der ein Querträger, an dem hydraulisch längsverstellbare, von außen in Öffnungen der Containereckverschlüsse eingreifende Greiforgane gelagert sind, vollkardanisch an einem am Schlitten gelagerten, mit vorderen und hinteren Laufrollen versehenen und gegenüber dem Aufbau des Schlittens hydraulisch ausfahrbaren Zwischenträgerwagen aufgehängt ist.
Das Vorsehen dieses Zwischenträgerwagens hat nämlich den entscheidenden Vorteil, daß Querkräfte beim Aufnehmen von zur Längsachse des Nutzfahrzeugs gewinkelt oder seitlich versetzt angeordneten Containern nicht auf den Schlitten und seinen Aufbau übertragen werden, sondern unten in der Auflagerung des Schieberahmens abgefangen werden.

Mit besonderem Vorteil kann dabei weiter vorgesehen sein, daß der Zwischenträgerwagen auf - in der ausgefahrenen Aufnahme- bzw. Absetzstellung des Schieberahmens - zumindest abschnittsweise gegenüber der Horizontalen, nach rückwärts geneigten, etwa in Höhe des Schieberahmens verlaufenden Führungsbahnen des Schlittenaufbaus verfahrbar ist, wobei diese Führungsbahnen den Schlittenaufbau in Längsrichtung des Fahrzeugs im wesentlichen durchsetzen. Diese Verlagerung der Führungsbahnen nach unten in die Abstützebene auf dem Schieberahmen verhindert, daß die in der Praxis unvermeidbaren, vorstehend bereits angesprochenen Querkräfte beim Aufnehmen von versetzten Containern zu einer Beschädigung des Schlittenaufbaus führen können.

Zur Erzielung der - zumindest über einen gewissen Schwenkbereich in allen denkbaren Richtungen - vollkardanischen Aufhängung des Querträgers am Zwischenträgerwagen kann in Weiterbildung der Erfindung vorgesehen sein, daß in dem als Rundrohr mit einem Fenster für das Verbindungsglied zum Zwischenträgerwagen ausgebildeten Querträger eine Innenhülse drehbar gelagert ist, in der um einen Querbolzen das Auge des Verbindungsgliedes schwenkbar gelagert ist. Durch die Drehbarkeit der Innenhülse um die Längsachse des Querträgers und die Verschwenkbarkeit des Verbindungsgliedes um die dazu senkrechte Achse des das Auge des Verbindungsgliedes durchsetzenden Querbolzens ergeben sich bereits zwei vertikal zueinander gerichtete Schwenkmöglichkeiten. Dabei hat es sich als zweckmäßig erwiesen, die Innenhülse mit einem einen Querschlitz für das Auge aufweisenden Vollkern zu versehen, um eine ausreichende Stabilität zu erreichen, die für das Aufnehmen von Containern von bis zu 30 t Gewicht und mehr unabdingbar ist.

Eine weitere vorteilhafte Möglichkeit des Abfangens von Querkräften und der Anpassung der hydraulischen Aufnahmevorrichtung für den Container an die örtlichen Gegebenheiten (Versetzung des Containers gegenüber dem Fahrzeug) ergibt sich nach einem weiteren Merkmal der vorliegenden Erfindung dadurch, daß die Innenhülse durch seitliche Wendeldruckfedern abgestützt, axial verschiebbar im Rundrohr gelagert ist. Auf diese Weise ist zusätzlich auch eine seitliche Verschiebung des Querträgers mit seinen Greiforganen gegenüber dem in der Mittellängsachse des Nutzfahrzeugs angeordneten Schlitten und seinem Zwischenträgerwagen möglich.

Die Wendeldruckfedern können dabei gleichzeitig als Torsionsfedern wirkend die Innenhülse mit dem Verbindungsglied federnd in der Mittelstellung ihres Schwenkbereichs um die Rundrohrachse halten.

Einen zusätzlichen Freiheitsgrad, der zu der angesprochenen vollkardanischen Lagerung führt, erhält man am einfachsten dadurch, daß das Verbindungsglied am vorderen Ende einen runden, um seine Achse drehbar am Zwischenträgerwagen gelagerten Lagerbolzenabschnitt aufweist.

Der Schlittenantrieb wird zweckmäßigerweise unter Verwendung stehender Antriebsketten realisiert.

Die Greiforgane an den beiden Seiten des Querträgers sind auf den Kolben von Hydraulikzylindern befestigt, die in dem Rundrohr angeordnet sich an den Außenseiten der Widerlager der Wendeldruckfedern abstützen, wobei bevorzugt die Greiforgane darüber hinaus mit einem in Führungen auf der Außenseite des Querträger-Rundrohrs geführten achsparallelen Drehsicherungsbolzen versehen sind.

Zur Verbesserung des Einziehens eines versetzt gegenüber dem Nutzfahrzeug am Boden abgestellten Containers, was in der Praxis die Regel darstellen dürfte, kann der Schlittenaufbau mit dem Querträger über schräg nach außen gestellte Teleskopstreben verbunden sein, deren kürzeste Einschublänge der Strebenlänge in der aufgezogenen Mittelstellung des Zwischenträgerrahmens entspricht. Dies bedeutet, daß beim Aufnehmen eines versetzten Containers zunächst die auf der Versetzungsseite angeordnete Teleskopstrebe zusammengeschoben wird, bis sie ihre blockierte kürzeste Einschublänge erreicht, woraufhin über diese Teleskopstrebe als Drehachse wirkend eine seitliche Verschiebung des vorderen Containerendes stattfindet, bis schließlich die gewünschte Ausrichtung erreicht ist.

Zur Sicherung des Containers in der aufgezogenen Fahrstellung können die Greiforgane mit einer im wesentlichen vertikal stehenden, hinter dem Querträger nach innen ragenden Führungsplatte mit einem Verriegelungszapfen versehen sein, der zur mechanischen Sicherung in eine Aufnahme am vorderen Ende des Aufbaus eingreift.

Entsprechend hat es sich auch als günstig erwiesen, wenn zur Seitenfixierung des Schlittens Zentrierzapfen am vorderen Ende des Aufbaus angeordnet sind, die in entsprechende Aufnahmen des Aufbaus eingreifen, so daß beim Fahren Querkräfte nicht auf den Schlittenaufbau selbst oder seine verfahrbare Lagerung auf dem Schieberahmen wirken können, sondern über diese Seitenfixierung unmittelbar abgefangen werden können.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

Fig. 1 eine Seitenansicht eines erfindungsgemäß aufgebauten Nutzfahrzeugs, wobei strichpunktiert die Kippstellung des Kipprahmens bei Benutzung von Schüttgutcontainern mit angedeutet ist,

Fig. 2 eine schematische Teilseitenansicht des Fahrzeugs in der ausgefahrenen Stellung des Schieberahmens unmittelbar vor dem Aufnehmen eines andeutungsweise erkennbaren Containers,

Fig. 3 eine vergrößerte Seitenansicht des hinteren Endes des Kipprahmens mit der hydraulischen, eine Hubschwinge umfassenden Hubvorrichtung,

Fig. 4 eine der Fig. 4 entsprechende Seitenansicht, bei der die Hubschwinge durch einen Greifarm zum Aufnehmen eines Schuttcontainers ersetzt ist,

Fig. 5 eine vergrößerte Rückansicht des Aufnahmeschlittens mit der Hubvorrichtung,

Fig. 6 eine teilweise geschnittene, vergrößerte Seitenansicht des hinteren Fahrzeugendes zur Verdeutlichung der absenkbaren Lagerung der hinteren Schwenkachse,

0188280

Fig. 7 einen horizontalen Teilschnitt durch das hintere
Ende des Kipprahmens, aus dem sich insbesondere auch
die Anordnung der Korrekturplatten zum Geraderichten
des hinteren Containerendes erkennen läßt,

Fig. 8 einen Schnitt längs der Linie VIII-VIII in Fig. 5,

Fig. 9 eine Seitenansicht einer abgewandelten Ausführungsform
eines erfindungsgemäß ausgebauten Nutzfahrzeugs,

Fig. 10 eine schematische Teilseitenansicht des Fahrzeugs
nach Fig. 9 in der ausgefahrenen Stellung des Schieberahmens unmittelbar vor dem Aufnehmen eines andeutungsweise erkennbaren Containers, wobei gestrichelt die
Kippstellung eingezeichnet ist,

Fig. 11 eine schematische Teilaufsicht auf den Schieberahmen
und den demgegenüber verkürzten innenliegenden Kipprahmen,

Fig. 12 eine vergrößerte Aufsicht in Richtung des Pfeils XII

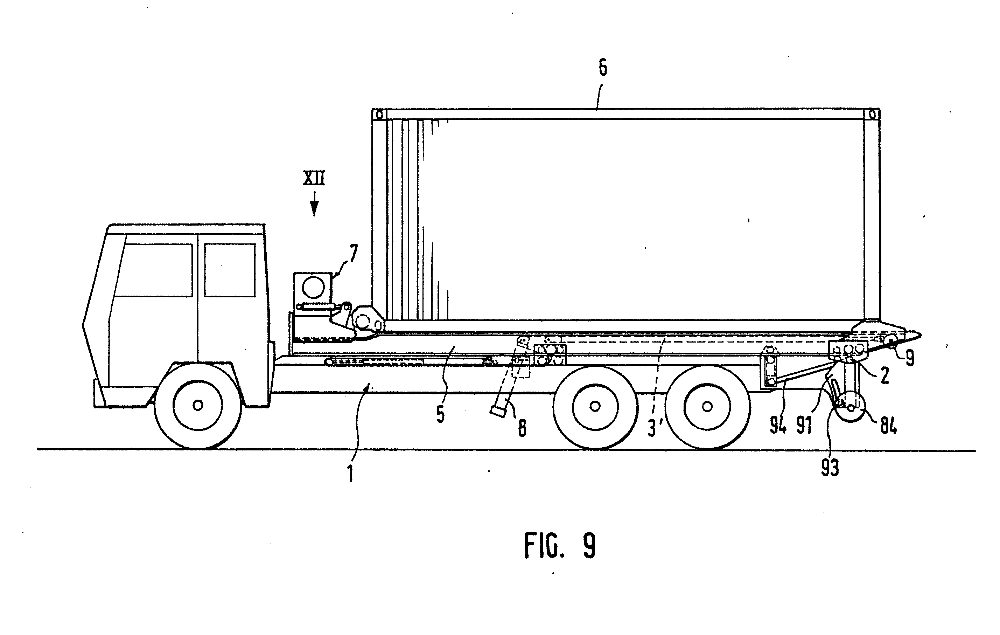

in Fig. 9 auf das vordere Ende des Aufbaus mit aufgezogenem Container,

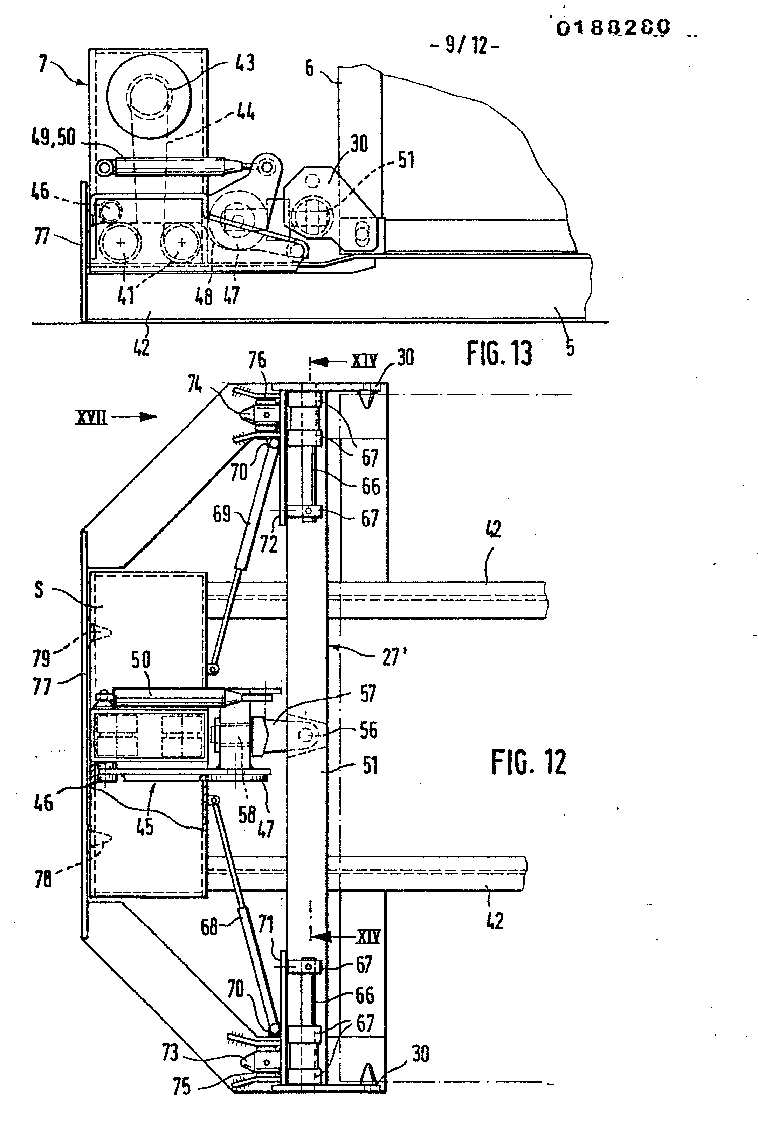

Fig. 13 eine Seitenansicht des vorderen Aufbaubereichs, wie er
in Fig. 12 in Aufsicht zu erkennen ist,

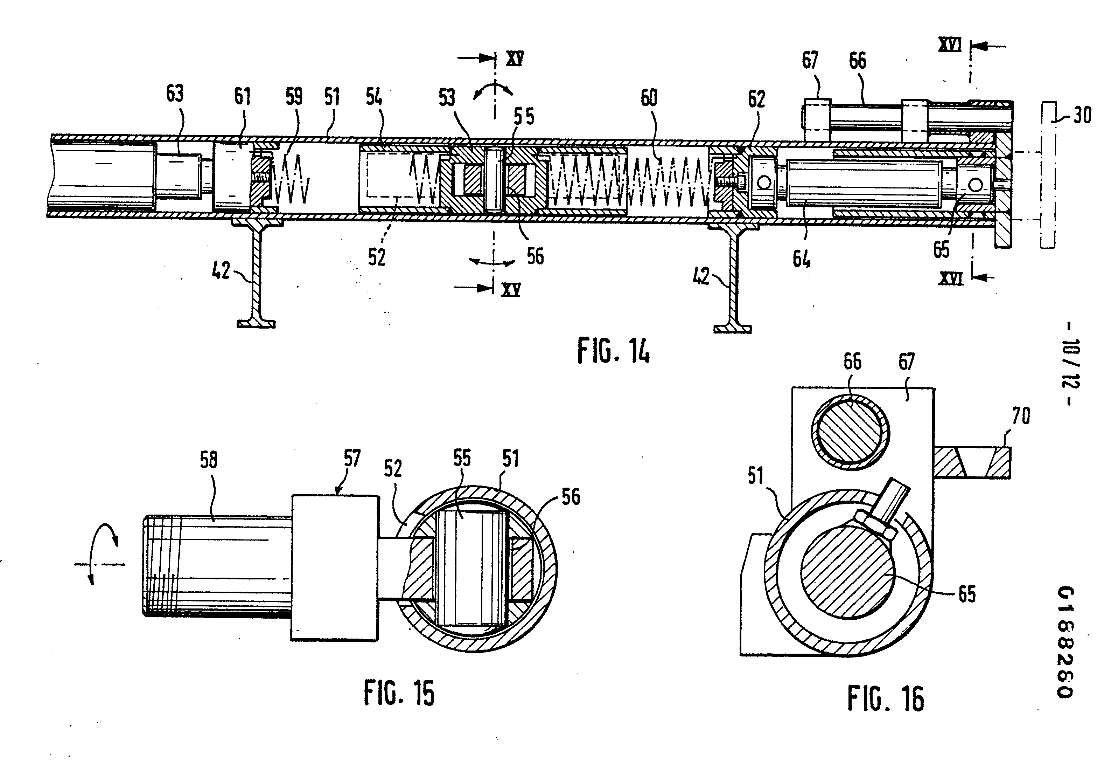

Fig. 14 eine teilweise längsgeschnittene vergrößerte Ansicht
des Querträgers mit den Greiforganen zur Aufnahme des
Containers,

Fig. 15 einen Querschnitt längs der Linie XV-XV in Fig. 14,

Fig. 16 einen Querschnitt im Bereich der Greiforgane längs
der Linie XVI-XVI in Fig. 14,

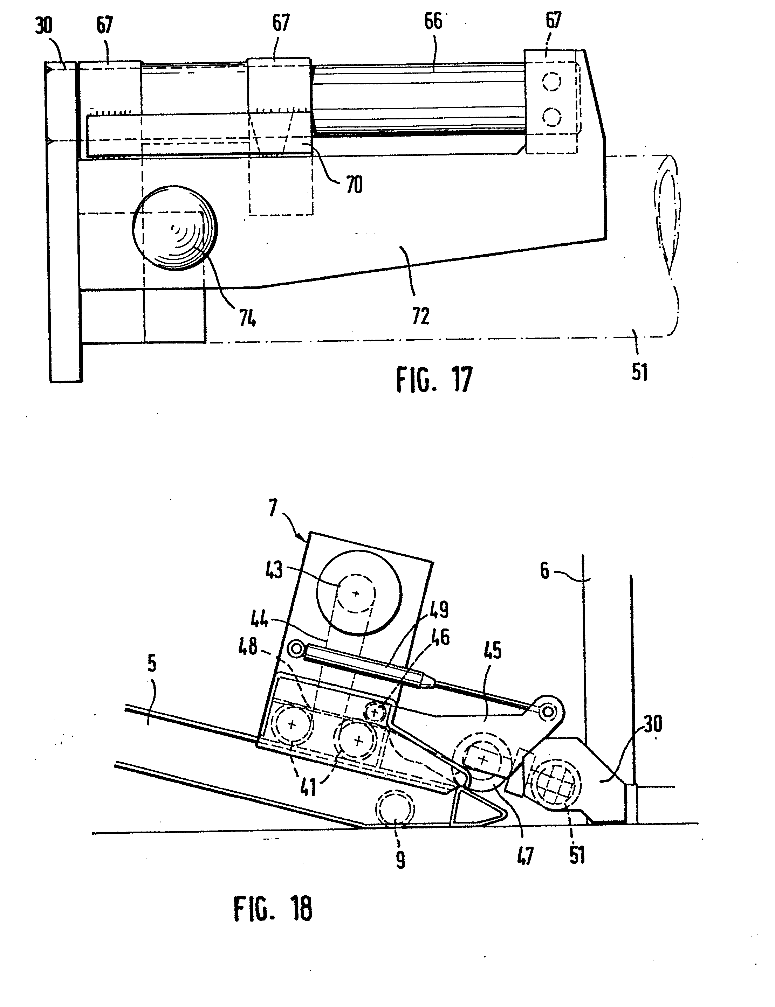

Fig. 17   eine Ansicht eines Querträgerendes in Richtung des
Pfeils XVII in Fig. 12,

Fig. 18   eine Seitenansicht des Schlittens mit ausgefahrenem
Zwischenträgerwagen in der Aufnahme- bzw. Absetzstellung, und

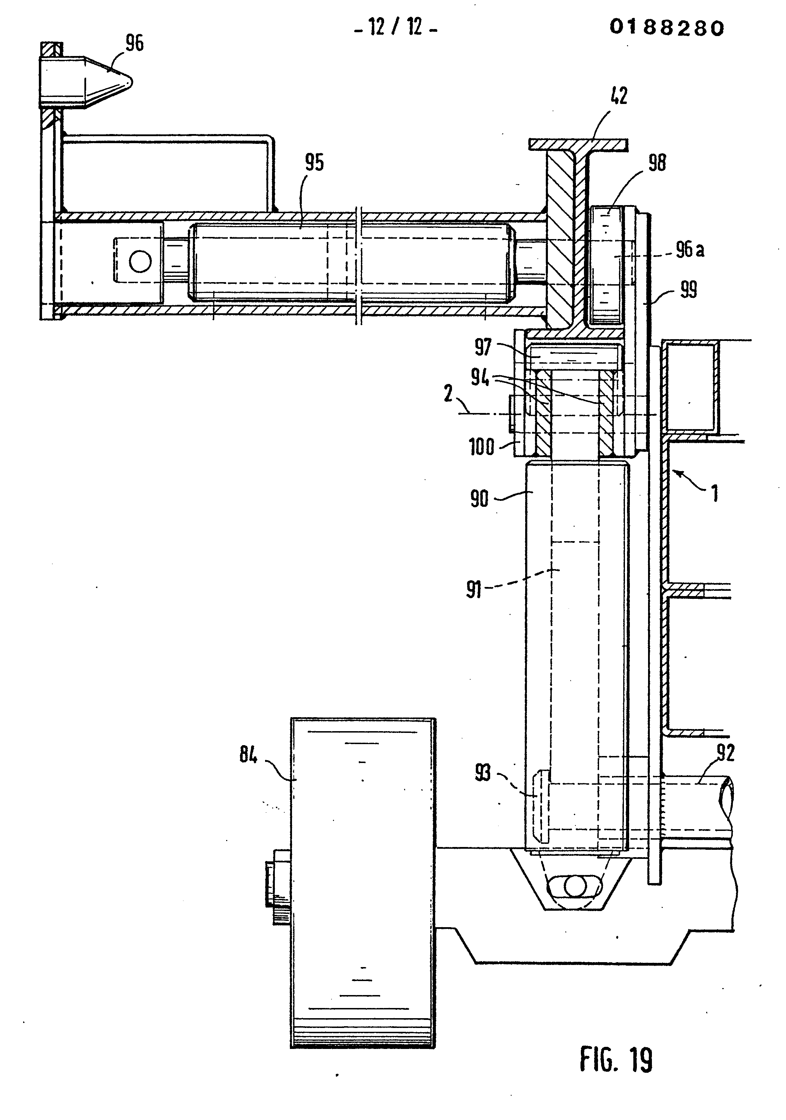

Fig. 19. eine vergrößerte Heckansicht.

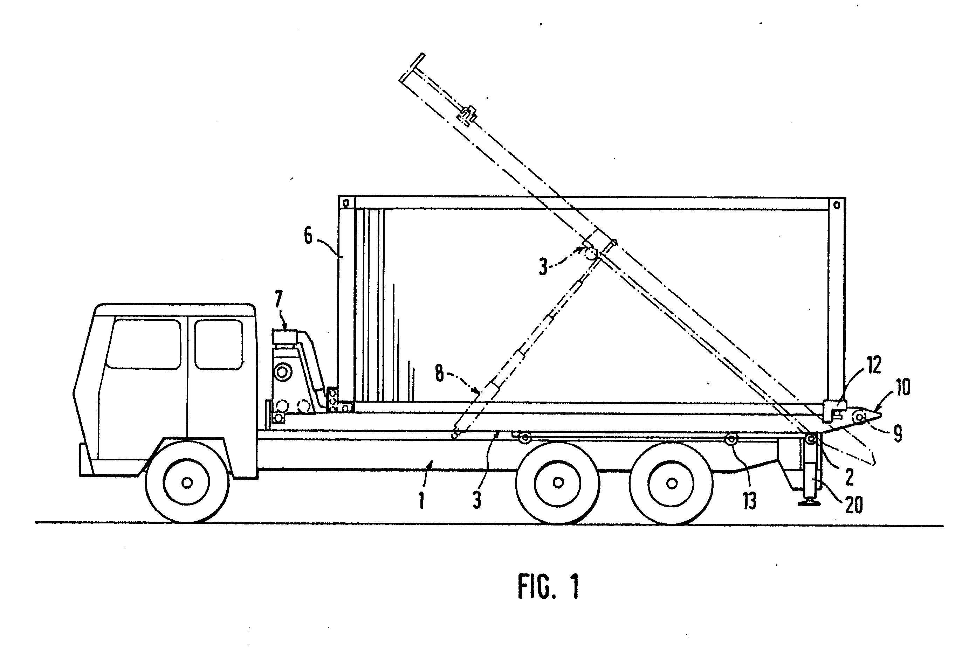

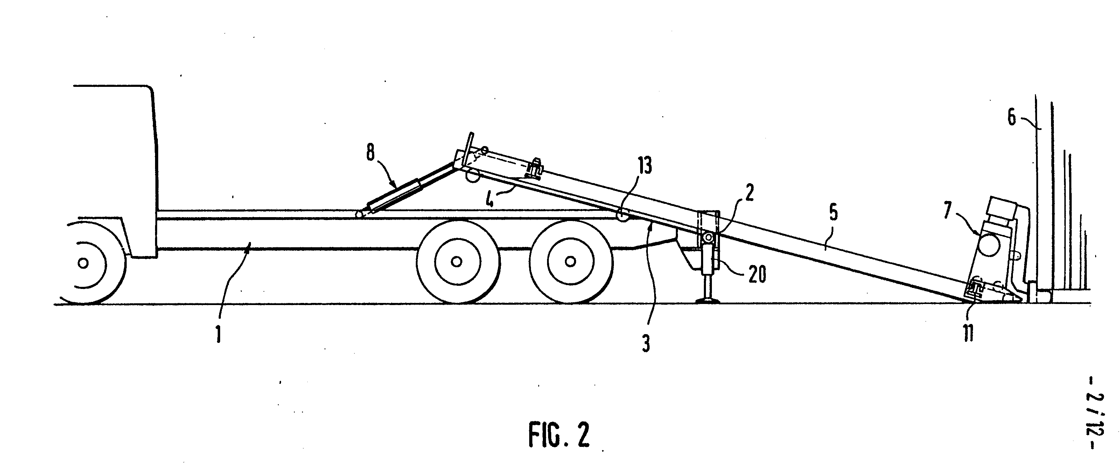

Das in den Figuren 1 bis 8 dargestellte Fahrzeug mit Wechselaufbau umfaßt einen gegenüber dem Fahrzeugrahmen 1 um seine
Hinterkante - hintere Schwenkachse 2 - schwenkbar gelagerten
Kipprahmen 3, der einen gegenüber einem unteren Trägerrahmen 4
längsverschiebbaren Schieberahmen 5 umfaßt. Auf diesem Schieberahmen, der zum Aufnehmen und Absetzen eines Containers 6 eine Gleitrampe bildet (vergl. Fig. 2), ist ein mit einer nicht gezeigten Antriebsvorrichtung versehener Schlitten mit einer hydraulischen Hubvorrichtung 7 verfahrbar angeordnet. Bei 8 ist schematisch der Kippzylinder zum Verschwenken des Kipprahmens gegenüber dem Fahrzeugrahmen angedeutet. Das mit Laufrollen 9 versehene hintere Absetzende 10 des Schieberahmens ist keilförmig ausgebildet, und zwar sowohl was die Oberals auch die Unterseite anlangt, so daß dieses Ende sich ohne Bildung einer hochliegende Kante, über die der Container 6 hinweggezogen werden muß, flach auf dem Boden absetzen läßt. Die Keilförmigkeit hat dabei insbesondere auch noch den Zweck, daß nach dem Anheben des vorderen Containerendes mit Hilfe der hydraulischen Hubvorrichtung 7 und während des anschließenden Heraufziehens des Containers auf die vom Schieberahmen 5 gebildete Gleitrampe überhaupt kein Kontakt zwischen dem Boden des Containers und der hinteren Kante des Schieberahmens besteht, so daß die Gefahr einer Beschädigung und eines Abknickens des Bodens völlig ausgeschlossen ist. Ein Kontakt zwischen dem Containerboden und dem hinteren Ende des Schieberahmens findet erst im allerletzten Abschnitt der Hochziehbewegung statt, wobei dann nicht der eigentliche Boden des Containers 6 mehr Kontakt zur hinteren Kante des Schieberahmens aufnimmt, sondern erst die hinteren Containereckbeschläge selbst. Dadurch ist jegliche Gefahr einer Beschädigung des Bodens durch das Heraufziehen auf die hintere Kante des Schieberahmens verhindert, so daß mit Hilfe einer erfindungsgemäßen Vorrichtung auch Container ohne unteres Trägerprofil (z.B. Tankaufbauten) aufgenommen und abgesetzt werden können. Unmittelbar im Anschluß an diesen Kontakt der hinteren Containereckverschlüsse mit dem Absetzende 10 des Schieberahmens 5 kommen diese hinteren Containereckverschlüsse über den Gegenverschlußteilen 11 des Schieberahmens zu liegen, so daß eine Containerarretierung erfolgen kann. Diese Containerverriegelung kann wahlweise auch durch seitlich verfahrbare Zapfen erfolgen. Wegen der in der Praxis praktisch unvermeidlichen

Längsachsenversetzung von Container und Fahrzeug ist allerdings - wie eingangs bereits im einzelnen beschrieben worden ist - ein Geraderichten des hinteren Containerendes erforderlich, was mit Hilfe der hydraulisch quer verstellbaren Korrekturplatten 12 erfolgen kann. Bei sehr starker Versetzung können diese Korrekturplatten bereits in Funktion treten, ehe der Container vollständig heraufgezogen ist. In den meisten Fällen genügt ihre Betätigung im Anschluß an das Heraufziehen des Containers, um ihn lediglich am hinteren Ende geradezurücken.

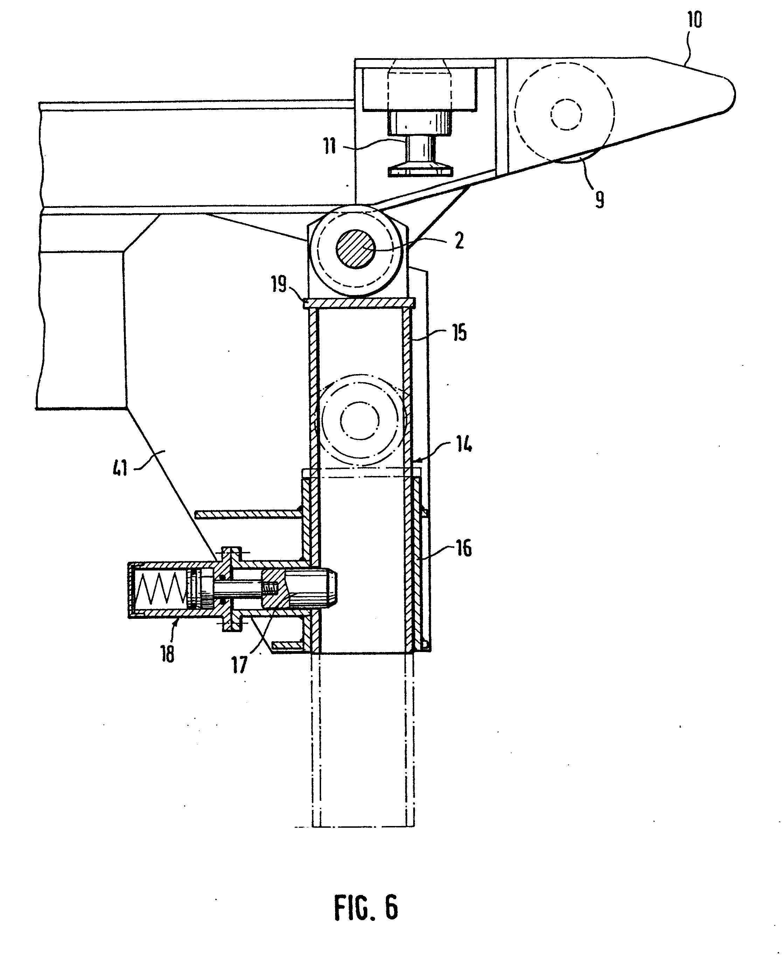

Neben der keilförmigen Ausbildung des hinteren Absetzendes des Schieberahmens 5 ist zusätzlich zur hinteren Schwenkachse des Kipprahmens 3, mit der der Kipprahmen gegenüber dem Fahrzeugrahmen 1 verschwenkt werden kann, eine zweite, durch zwei Rollen 13 gebildete, Schwenkachse vorgesehen. Gleichzeitig ist die hintere Schwenkachse 2 gegenüber ihrer oberen arretierbaren Normalstellung in eine untere Aufnahmestellung absenkbar. Zu diesem Zweck ist die hintere Schwenkachse 2 an einem Rohrgestänge 14 gelagert, welches aus einem inneren Schieberohr 15 und einem starr an einem Ausleger 41 des Fahrzeugrahmens befestigten äußeren Führungsrohr 16 besteht. Normalerweise ist durch einen Verriegelungsbolzen 17 dieses Verschiebegestänge gegeneinander arretiert, so daß sich die hintere Schwenkachse 2 in ihrer oberen arretierten Stellung befindet, wie sie beispielsweise zum Kippen des Behälters gemäß Fig. 1 benutzt wird. Bei einem Entriegeln des Verschiebegestänges, d.h. einem Zurückziehen des Verriegelungsbolzens 17 mit Hilfe einer nur schematisch angedeuteten Hydraulikvorrichtung 18, erfolgt beim Ankippen des Kipprahmens 3 mit Hilfe des Kippzylinders 8 eine Verschwenkung des Kipprahmens um die zweite durch die Rollen 13 gebildete Schwenkachse, während gleichzeitig mit zunehmender Verkippung die hintere Kippachse 2 nach unten gedrückt wird, so daß die Schiebehülse 15 in die Führungshülse 16 gleitet, bis schließlich die überstehende einen Anschlag bildende obere Platte 19 an der Oberkante der Führungshülse 16 anschlägt, wie es in Fig. 6 strichpunktiert mit dargestellt ist. Damit ist dann die unterste Absenkstellung der hinteren Schwenkachse des Kipprahmens erreicht. Der Zweck dieser Absenkbarkeit der hinteren Schwenkachse unter Benutzung einer zweiten Schwenkachse 13 liegt darin, daß auf diese Art und Weise ein flacheres Ausfahren des Schieberahmens 5 und damit ein leichtes Heraufziehen auch schwerer Container möglich ist. Um Mißverständnisse zu vermeiden sei in diesem Zusammenhang darauf hingewiesen, daß die in Fig. 1 und 2 erkennbaren hydraulisch betätigbaren Stützfüße 20 mit dem Verschiebegestänge 14 überhaupt nichts zu tun haben, sondern in Abstand zu diesen weiter außen am Fahrzeugrahmen befestigt sind.

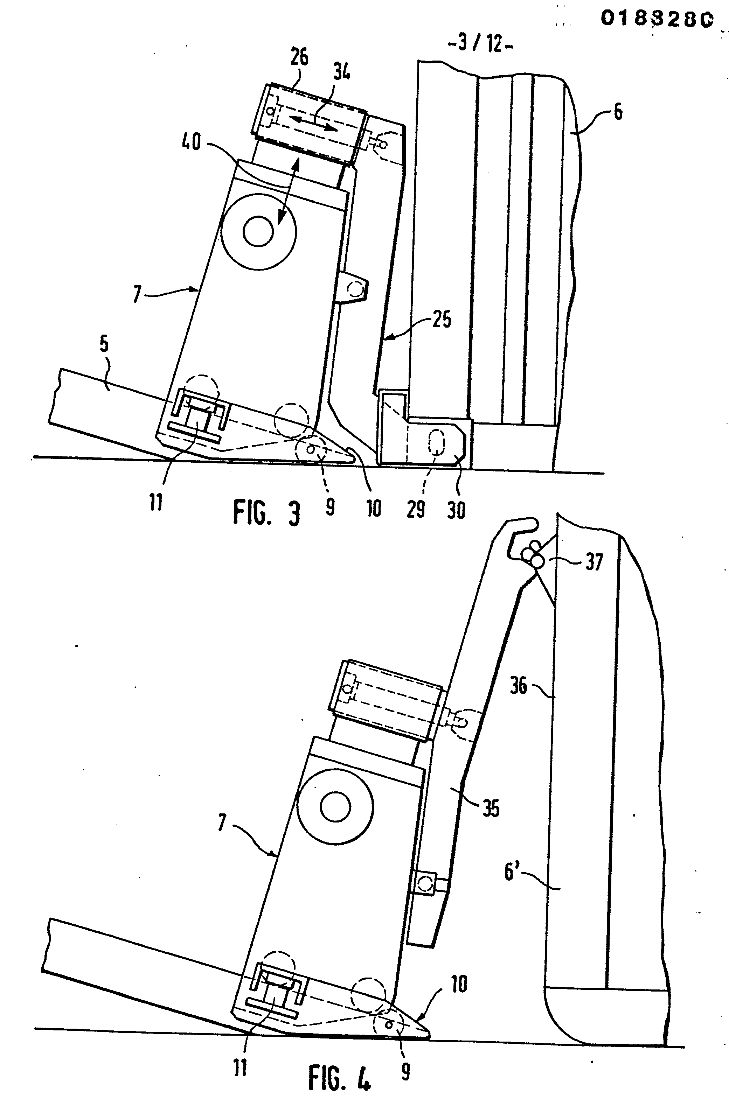

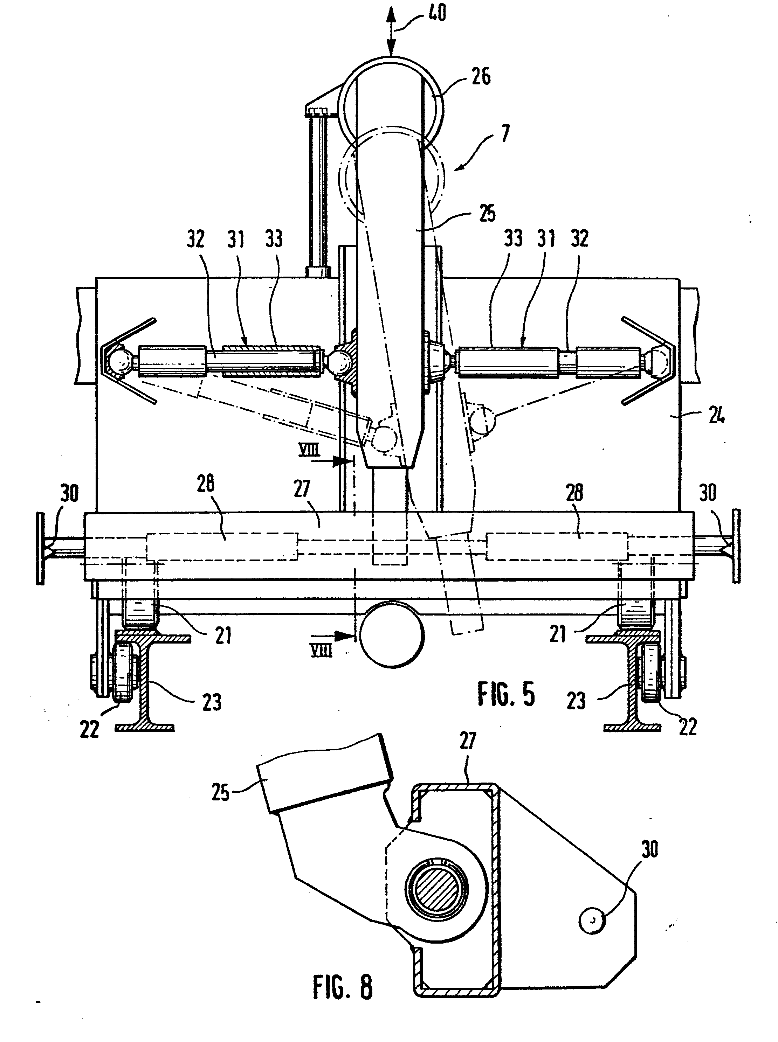

Die hydraulische Hubvorrichtung 7 besteht aus einem schlittenartig mit Hilfe von Laufrollen 21, 22 auf den seitlichen Doppel-T-Trägern 23 des Schieberahmens 5 verfahrbaren Tragvorrichtung 24 für eine Hubschwinge 25. Die Hubschwinge 25 ist am oberen Ende schwenkbar an einem parallel zur Längsachse des Schieberahmens ausfahrbaren Hydraulikkolben 26 gelagert, der seinerseits mit Hilfe eines in der Tragvorrichtung 24 eingebauten, im einzelnen nicht gezeigten, Hubzylinders in Richtung des Doppelpfeils 40 nach oben und unten verschoben werden kann. Gleichzeitig läßt sich die Hubschwinge 25 um die Längsachse des Hubzylinders in der Tragvorrichtung 24 schwenken. Am unteren Ende der Hubschwinge 25 ist ein Querträger 27 befestigt, an dem mit Hilfe zweier hydraulischer Verschiebezylinder 28 von außen in Öffnungen 29 der Containereckverschlüsse eingreifende Greiforgane 30 gelagert sind. Die Hubschwinge ist in der in Fig. 5 ausgezogen dargestellten Mittelstellung mit Hilfe von hydraulischen Arretierzylindern 31 feststellbar. Die hydraulischen Arretierzylinder 31 lassen
bei freiem Kolben, d.h. wenn sie nicht mit Druck beaufschlagt
sind, eine Verschwenkung der Hubschwinge zu, wie sie in der
einen Schwenkrichtung strichpunktiert in Fig. 5 angedeutet
ist. Sobald die Kolben der Stellzylinder 31 unter Druck gesetzt werden, werden die Kolbenstangen 32 in den kardanisch
an den Seiten der Hubschwinge gelagerten Hülsen 33 nach innen
gefahren und drücken damit die Hubschwinge in die vertikale
Mittelstellung. Die Verschiebbarkeit der Hubschwinge längs
der Doppelpfeile 40 und 34 (Fig. 3) sowie die kardanische
Aufhängung des Querträgers 27 an der Hubschwinge 25 (vgl. insbes. Fig. 8) ermöglichen eine ausreichende Verstellbarkeit
der Greiforgane, um unabhängig von jeder Verkippung und Längsachsenversetzung des Containers gegenüber dem Zugfahrzeug ein
Eingreifen der Greiforgane 30 in die Öffnungen 29 der Containereckverschlüsse zu garantieren.

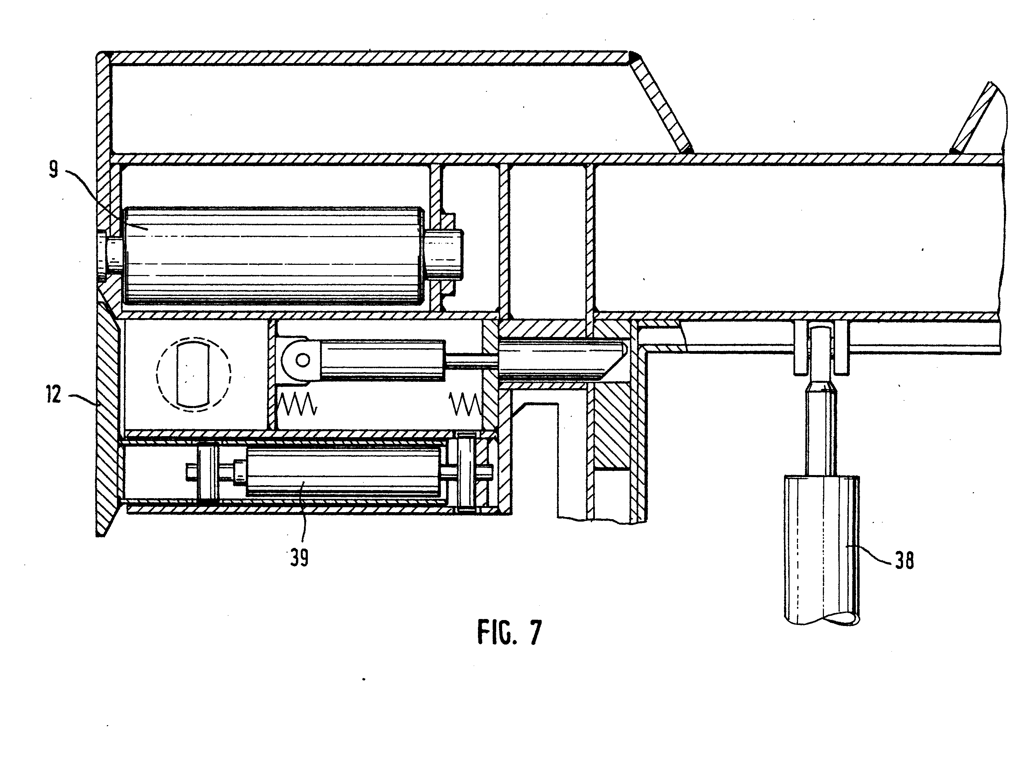

In Fig. 4 ist eine Abwandlung angedeutet, bei der durch Austausch der Hubschwinge 25 gegenüber einem Greifarm 35, der
in gleicher Weise durch die Stellzylinder 31 in der Mittelstellung gehalten wird, ein Aufnehmen von Schuttcontainern
6' oder ähnlichen anderen Containern möglich ist, bei denen
im Bereich der Vorderwand 36 ein Aufnahmebügel 37 vorgesehen
ist. In Fig. 7 erkennt man im einzelnen nochmals die Bodenrollen 9 sowie den Plateauaushubzylinder 38 und die Korrekturplatten 12, die mit Hilfe einer Hydraulikzylindervorrichtung
39 für das Geraderichten des hinteren Containerendes benötigt werden.

In den Figuren 9 bis 18 ist eine zweite Ausführungsform eines
erfindungsgemäßen Nutzfahrzeugs dargestellt, das sich von dem
nach den Figuren 1 bis 8 im wesentlichen durch ein geändertes
hydraulisches Aufnahmesystem, eine andere Ausbildung des Kipprahmens sowie eine Abwandlung im Bereich der Lagerung der hinteren Schwenkachse unterscheidet.

Der Schlitten S mit der hydraulischen Hubvorrichtung 7 ist mit Rollen 41 versehen, die auf den Längsholmen 42 des Schieberahmens verfahrbar sind. Die Verfahrung des Schlittens mit der Hubvorrichtung erfolgt über ein über einen Hydraulik- oder Elektromotor angetriebenes Kettenrad 43 sowie stehende Antriebsketten 44. Im Aufbau 7 des Schlittens ist ein Zwischenträgerwagen 45 verfahrbar gelagert. Hierzu sind vordere Laufradpaare 46 und hintere Laufradpaare 47 vorgesehen, denen im hinteren Abschnitt nach unten geneigte, den Aufbau 7 im wesentlichen durchsetzende Führungsbahnen 48 zugeordnet sind. Das Ein- und Ausfahren dieses Zwischenträgerwagens 45 erfolgt über Hydraulikzylinder 49, 50, wobei man die eingefahrene Stellung in Fig. 13 und die ausgefahrene Aufnahme- bzw. Absetzstellung besonders gut in Fig. 18 erkennen kann. Am Zwischenträgerwagen 45 ist vollkardanisch ein Querträger 27' aufgehängt, der gegenüber dem Querträger 27 des vorhergehenden Ausführungsbeispiels in einer Reihe von Punkten abgewandelt ist. Der Querträger 27' umfaßt ein äußeres Rundrohr 51, in welchem eine mit einem massiven Kern 53 verschweißte Innenhülse 54 drehbar gelagert ist. Der Kern 53 der Innenhülse 54 wird von einem Lagerbolzen 55 durchsetzt, welcher das Auge 56 des Verbindungsglieds 57 zwischen Querträger 27' und dem Zwischenträgerwagen 45 um eine zur Längsachse des Querträgers 27' senkrechte Achse drehbar haltert. Das Verbindungsglied 57 weist einen runden, drehbar am Zwischenträgerwagen gelagerten Lagerabschnitt 58 auf, so daß durch diese drei vertikal zueinander verlaufenden Drehachsen insgesamt eine vollkardanische Verbindung des Zwischenträgerwagens 45 mit dem Querträger 27' erzielt ist.

Die Innenhülse 54 ist außer ihrer drehbaren Lagerung im Rundrohr 51 in diesem auch axial verschiebbar und stützt sich dabei über Wendeldruckfedern 59 und 60 an Widerlagern 61 und 62 ab. Die Wendeldruckfedern 59 und 60 sind dabei so ausgebildet, daß sie gleichzeitig als Torsionsfedern wirkend die Innenhülse mit dem daran befestigten Verbindungsglied 57 in der
jeweiligen Mittelstellung des Fensters 52 im Rundrohr 51
halten. An der Außenseite der Widerlager 61 und 62 stützen
sich Hydraulikzylinder 63 und 64 ab, deren Kolben 65 mit den
Greiforganen 30 verbunden sind. Die Greiforgane sind darüber
hinaus mit Drehsicherungsbolzen 66 versehen, die in Führungen
67 auf der Außenseite des Rundrohrs 51 gleitend geführt sind,
·so daß auf diese Weise eine Drehsicherung der Greiforgane 30
gegenüber dem Rundrohr 51 erzielt ist. In Verbindung mit der
federnden Aufhängung am Verbindungsglied 57 (vermittelt über
die als Torsionsfedern wirkenden Wendeldruckfedern 59 und 60)
ist auf diese Weise eine federnde Halterung der Greiforgane
in einer definierten Ausgangslage gegeben.

Durch die vollkardanische Verbindung des Querträgers 27' mit
dem gesonderten Zwischenträgerwagen 45 entfallen Querkräfte
auf den Schlitten S und insbesondere seinen Aufbau 7, da diese
im wesentlichen über die Führungsbahnen in der Ebene des
Schieberahmens 5 unmittelbar abgefangen werden. Der Zwischenträgerwagen und die kardanische Verbindung mit dem Querträger
ermöglichen - noch dazu in Verbindung mit der längsverschieblichen Lagerung der Innenhülse ein sehr einfaches Aufnehmen
eines Containers 6, auch wenn er gegenüber dem ausgefahrenen
Schieberahmen 5 seitlich versetzt und/oder abgewinkelt am Boden
aufgestellt ist. Beim Hochziehen mit Hilfe der Hydraulikzylinder
49 und 50 sorgen Teleskopstreben 68 und 69 für eine exakte
Ausrichtung. Bei einer versetzten oder abgewinkelten Absetzung
des Containers wird zunächst eine dieser Teleskopstreben bis
zu ihrer kürzesten Endlage zusammengeschoben und drückt dann
anschließend den Container entsprechend herum, so daß schließlich in der Endaufnahmestellung (Fig. 12) beide Teleskopstreben
68 und 69 bis zu ihrer blockierten kürzesten Länge zusammengeschoben sind und der Container symmetrisch zur Längsachse des
Aufbaus angeordnet ist. Zur Einhängung der Teleskopstreben 68
und 69 am Querträger dienen Ösen 70, die an Führungsplatten 71

and 72 angeschweißt sind, welche vor dem Querträger 27' nach anen ragend an den Greiforganen 30 angeschweißt sind. Diese Führungsplatten 71 und 72 sind mit Verriegelungszapfen 73 und 74 versehen, welche in entsprechende Aufnahmen 75 bzw. 76 am vorderen Ende des Aufbaus einragen, sobald der Container vollständig auf den Aufbau heraufgezogen ist, um auf diese Art und Weise eine mechanische Sicherung in der aufgezogenen Fahrstellung zu bewirken. In entsprechender Weise sind an der Vorderwand 77 des Aufbaus Zentrierzapfen 78 und 79 befestigt, die in entsprechende, im einzelnen nicht dargestellte Aufnahmen des Schlittens bzw. seines Aufbaus 7 einragen, um eine Seitenfixierung herbeizuführen, so daß Seitenkräfte während der Fahrt, insbesondere die in den Kurven auftretenden Verschiebekräfte,nicht über die Lagerungen des Schlittens abgefangen werden müssen, sondern über diese Zapfen 78, 79 an den Fahrzeugrahmen abgeleitet werden können.

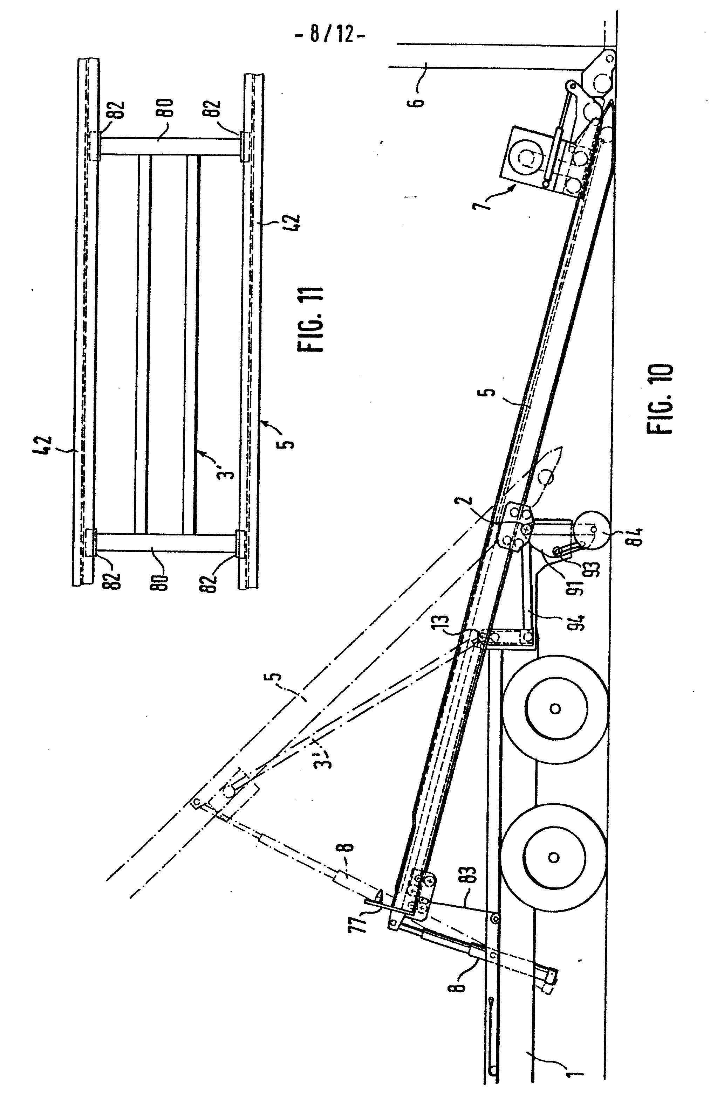

Neben dieser verbesserten hydraulischen Aufnahmevorrichtung ist bei der Anordnung nach den Figuren 9 bis 18 (vergl. insbesondere die Figuren 10 und 11) ein verschmälerter und verkürzter Kipprahmen 3' vorgesehen, der mit seinem hinteren Ende an der innenliegenden Schwenkachse 13 angelenkt ist. An diesem Kipprahmen 3',der zwischen den Längsholmen 42 des Schieberahmens angeordnet ist, sind Querachsen 80 und 81 befestigt, an deren Enden die Schieberahmen-Längsstreben 42 abstützende Rollen 82 gelagert sind. Das Ankippen des Kipprahmens zusammen mit dem Schieberahmen 5 erfolgt mit Hilfe des Hydraulikzylinders 8, wobei zusätzlich eine hydraulische Seilzugeinzugsvorrichtung 83 vorgesehen ist, welche insbesondere bei hecklastigen Containern sicherstellt, daß der Kipprahmen aus seiner angekippten Stellung (in Fig. 10 gestrichelt) auch wieder in die normale Fahrstellung zurückgezogen werden kann, was über den Kippzylinder 8 nicht ohne weiteres möglich wäre.

Auch bei der Anordnung nach den Figuren 9 bis 18 ist selbstverständlich die hintere Schwenkachse 2 wieder absenkbar am Fahrzeugrahmen angeordnet, wobei darüber hinaus zusätzlich ausfahrbare Stützräder 84 vorgesehen sind. Im Gegensatz zu den starren Stützen bei der Anordnung nach den Figuren 1 bis 8 ermöglichen diese beim Aufnehmen des Containers 6 eine unmittelbare Abstützung der hinteren Schwenkachse 2 am Boden und dennoch eine Arbeitsweise, bei der das Fahrzeug unter den meist erheblich schweren Container 6 gezogen wird, ehe dieser im letzten Moment dann vollständig auf den Schieberahmen heraufgezogen wird.

Aus Fig. 19 erkennt man im einzelnen die Abstützung der hinteren Schwenkachse 2 sowie die Containerverriegelung. Die Abstützung der hinteren Schwenkachse erfolgt dabei auf zwei unterschiedliche Weisen. In der in Fig. 10 dargestellten Aufnahme- und Absetzstellung erfolgt die Abstützung der hinteren Schwenkachse einfach dadurch, daß beim Kippen um die vordere Schwenkachse 13 das hintere Teil des Schieberahmens 5 mit der hinteren Schwenkachse 2 automatisch nach unten gedrückt wird, wobei der Hydraulikzylinder 90 überhaupt nicht betätigt wird. Bei diesem Nach-unten-Absenken wird das Führungsrohr 92 für die Kulisse 91 - den Kopf 93 des Führungsrohrs kann man auch in der Seitenansicht erkennen - zusammen mit dem Stützrad 84 abgesenkt, wobei die Absenkung solange erfolgt, bis schließlich das Stützrad 84 auf dem Boden aufgesetzt hat. Durch die Integrierung des Hydraulikzylinders 90 - der also bei dieser Art der Verschwenkung, wie sie in Fig. 10 zu sehen ist, überhaupt nicht in Funktion tritt - ist es aber auch möglich, eine Abstützung der hinteren Schwenkachse 2 in der strichpunktierten Kippstellung und in der Überschiebestellung zu erreichen, wenn der Container von einem Zugfahrzeug auf einen Anhänger oder auf eine Ladeplattform überschoben wird. In diesem Fall wird die Absenkung des Stützrades 84 durch Betätigung des Hydraulikzylinders 90 durchgeführt.

0188280

Die Strebe 94 sorgt im übrigen dafür, daß bei der vorstehend beschriebenen Verkippung des Schieberahmens 5 eine im wesentlichen vertikale Absenkung des Stützrades mit dem dabei nur als starre Strebe wirkenden Hydraulikzylinders stattfindet.

Der Containerverriegelungszylinder 95 betätigt eine Verriegelungsplatte mit einem Verriegelungszapfen 96, der von außen in den hinteren Containereckverschluß eingreifen kann. Die Ausbildung dieses Containerverriegelunszylinders 95 ist dabei so getroffen, daß auf der Innenseite mit der Verschiebung der Verriegelungsplatte mit dem Verriegelungszapfen 96 ein Verriegelungszapfen 96a mitverschoben wird, der in der Verriegelungsstellung des Containerverriegelungszapfens 96 den Doppel-T-Träger 42 durchsetzt und ihn damit gegen eine Längsverschiebung verriegelt. Nur bei geöffnetem Containerverschlußzapfen 96 (in der nach links außen in Fig. 19 verschobenen STellung) gibt der Schieberahmenverriegelungszapfen 96a den Längsträger 42 frei.

Die Verschiebung des Längsträgers 42 des Schieberahmens 5 erfolgt über untere Führungsrollen 97 und auf der Innenseite angreifende obere Führungsrollen 98. Die Seitenführung wird durch die äußeren seitlichen Führungsplatten 100 und die inneren seitlichen Führungsplatten 99 erreicht, wobei die letztere an der am Hauptrahmen 1 befestigten Platte entlanggleitet.

**0188280**

Patentansprüche

1. Nutzfahrzeug mit einem zur Aufnahme eines wechselbaren Aufbaus (Container) dienenden, gegenüber dem Fahrzeugrahmen um seine Hinterkante schwenkbar gelagerten Kipprahmen, der einen gegenüber einem unteren Trägerrahmen längsverschiebbaren, eine Gleitrampe bildenden Schieberahmen mit einem mit einer Antriebsvorrichtung versehenen Schlitten mit einer hydraulischen Hubvorrichtung zum Absetzen, Überschieben und Aufnehmen des Aufbaus aufweist, dadurch gekennzeichnet, daß der Schieberahmen (5) am hinteren Absetzende (10) keilförmig ausläuft, derart, daß beim Aufnehmen des am vorderen Ende mittels der hydraulischen Hubvorrichtung (7) angehobenen Aufbaus (6) eine Berührung erst mit den hinteren Eckverschlüssen erfolgt.

2. Nutzfahrzeug insbesondere nach Anspruch 1, dadurch gekennzeichnet, daß der Kipprahmen (3) eine gegenüber der Schwenkachse des Schieberahmens nach vorne versetzte zweite Schwenkachse (13) aufweist und daß die hintere Schwenkachse (2) gegenüber ihrer oberen arretierbaren Normalstellung in eine untere Aufnahmestellung absenkbar ist.

3. Nutzfahrzeug nach Anspruch 2, dadurch gekennzeichnet, daß die zweite Schwenkachse durch am Fahrzeugrahmen (1) zwischen dem Kippzylinder (8) und der hinteren Schwenkachse (2) gelagerte Rollen (13) für den Kipprahmen (3) gebildet ist.

4. Nutzfahrzeug nach Anspruch 2 oder 3, gekennzeichnet durch einen die Aufnahmestellung begrenzenden Anschlag (19) des die hintere Schwenkachse (2) gegenüber dem Fahrzeugrahmen (1) absützenden, vorzugsweise zwei ineinandergeführte Rohre (15, 16) umfassenden Verschiebegestänges.

. Nutzfahrzeug nach Anspruch 4, <u>dadurch gekennzeichnet</u>, daß der Schieberahmen (5) am Ende mit Laufrollen (9) versehen ist.

6. Nutzfahrzeug nach einem der Ansprüche 2 bis 4, <u>dadurch gekennzeichnet</u>, daß die Lagerung der hinteren Schwenkachse (2) mit ausfahrbaren Stützrädern (84) versehen ist.

7. Nutzfahrzeug mit einem zur Aufnahme eines wechselbaren Aufbaus (Container) dienenden, gegenüber dem Fahrzeugrahmen um seine Hinterkante schwenkbar gelagerten Kipprahmen, der einen gegenüber einem unteren Trägerrahmen längsverschiebbaren, eine Gleitrampe bildenden Schieberahmen mit einem mit einer Antriebsvorrichtung versehenen Schlitten mit einer hydraulischen Hubvorrichtung zum Absetzen, Überschieben und Abnehmen des Aufbaus aufweist, insbesondere nach einem der Ansprüche 1 bis 6, <u>dadurch gekennzeichnet</u>, daß die hydraulische Hubvorrichtung (7) eine Hubschwinge (25) mit einem kardanisch aufgehängten Querträger (27) umfaßt, an dem hydraulisch längsverstellbare, von außen in Öffnungen der Containereckverschlüsse eingreifende Greiforgane (30) gelagert sind.

8. Nutzfahrzeug nach Anspruch 7, <u>dadurch gekennzeichnet</u>, daß die Hubschwinge (25) arretierbar kardanisch an der Tragvorrichtung auf dem Schlitten schwenkgelagert ist.

9. Nutzfahrzeug nach Anspruch 7, <u>dadurch gekennzeichnet</u>, daß die in einer Ebene senkrecht zur Längsachse des Schieberahmens (5) schwenkbar gelagerte, durch hydraulische Stellzylinder (31) in ihrer Mittelebene feststellbare, Hubschwinge (25) am oberen Ende an einem zur Längsachse des Schieberahmens (5) ausfahrbaren Hydraulikkolben gelagert ist, der auf einem im Aufbau des Schlittens angeordneten Hubzylinder befestigt ist.

10. Nutzfahrzeug nach Anspruch 9, dadurch gekennzeichnet, daß
    die Hubschwinge (25) lösbar an der Tragvorrichtung (24)
    des Schlittens gelagert und durch einen Hakenarm (35) zur
    Aufnahme von Schuttcontainern (6') od.dgl. ersetzbar ist.

11. Nutzfahrzeug nach einem der Ansprüche 1 bis 10, gekennzeichnet durch am Ende des Schieberahmens (5) angeordnete
    hydraulisch querverstellbare Korrektur-Platten (12) zum
    Geraderichten des hinteren Containerendes.

12. Nutzfahrzeug mit einem zur Aufnahme eines wechselbaren Aufbaus (Container) dienenden, gegenüber dem Fahrzeugrahmen
    um seine Hinterkante schwenkbar gelagerten Kipprahmen, der
    einen gegenüber einem unteren Trägerrahmen längsverschiebbaren, eine Gleitrampe bildenden Schieberahmen mit einem
    mit einer Antriebsvorrichtung versehenen Schlitten mit
    einer hydraulischen Hubvorrichtung zum Absetzen, Überschieben und Abnehmen des Aufbaus aufweist, insbesondere nach
    einem der Ansprüche 1 bis 6, dadurch gekennzeichnet, daß
    ein Querträger (27'),an dem hydraulisch längsverstellbare,
    von außen in Öffnungen der Containereckverschlüsse eingreifende Greiforgane (30) gelagert sind, vollkardanisch
    an einem am Schlitten (S) gelagerten, mit vorderen und hinteren Laufrollen versehenen und gegenüber dem Aufbau (7) des
    Schlittens (S) hydraulisch ausfahrbaren Zwischenträgerwagen (45) aufgehängt ist.

13. Nutzfahrzeug nach Anspruch 12, dadurch gekennzeichnet, daß
    der Zwischenträgerwagen (45) auf - in der ausgefahrenen
    Aufnahme- bzw. Absetzstellung des Schieberahmens (5) -
    zumindest abschnittsweise gegenüber der Horizontalen nach
    rückwärts geneigten, etwa in Höhe des Schieberahmens verlaufenden Führungsbahnen (48) des Schlittenaufbaus (7)
    verfahrbar ist.

14. Nutzfahrzeug nach Anspruch 13, dadurch gekennzeichnet, daß die Führungsbahnen (48) den Schlittenaufbau (7) in Längsrichtung des Fahrzeugs im wesentlichen durchsetzen.

15. Nutzfahrzeug nach einem der Ansprüche 12 bis 14, dadurch gekennzeichnet, daß der Querträger (27') ein äußeres Rundrohr (51) mit einem Fenster (52) für das Verbindungsglied (57) zum Zwischenträgerwagen (45) umfaßt, in welchem eine Innenhülse (54) drehbar gelagert ist, in der um einen Querbolzen (55) das Auge (56) des Verbindungsgliedes (57) schwenkbar gelagert ist.

16. Nutzfahrzeug nach Anspruch 15, dadurch gekennzeichnet, daß die Innenhülse (54) mit einem, einen Querschlitz für das Auge (56) aufweisenden, Vollkern (53) versehen ist.

17. Nutzfahrzeug nach Anspruch 15 oder 16, dadurch gekennzeichnet, daß die Innenhülse (54) durch seitliche Wendeldruck federn (59, 60) abgestützt axial verschiebbar im Rundrohr (51) gelagert ist.

18. Nutzfahrzeug nach Anspruch 17, dadurch gekennzeichnet, daß die Wendeldruckfedern (59, 60) gleichzeitig als Torsionsfedern wirkend die Innenhülse (54) mit dem Verbindungsglied (57) federnd in der Mittelstellung ihres Schwenkbereichs um die Rundrohrachse halten.

19. Nutzfahrzeug nach einem der Ansprüche 15 bis 18, dadurch gekennzeichnet, daß das Verbindungsglied (57) am vorderen Ende einen runden, um seine Achse drehbar am Zwischenträgerwagen (45) gelagerten Lagerbolzenabschnitt (58) aufweist.

20. Nutzfahrzeug nach einem der Ansprüche 6 bis 19, dadurch gekennzeichnet, daß die Antriebsvorrichtung des Schlittens (S) stehende Antriebsketten (44) umfaßt.

21. Nutzfahrzeug nach einem der Ansprüche 17 bis 20, <u>dadurch gekennzeichnet</u>, daß an den Außenseiten der Widerlager (61, 62) der Wendeldruckfedern Hydraulikzylinder (63, 64) abgestützt sind, deren Kolben (65) die Greiforgane (30) tragen.

22. Nutzfahrzeug nach Anspruch 21, <u>dadurch gekennzeichnet</u>, daß die Greiforgane (30) mit einem in Führungen (67) auf der Außenseite des Querträger-Rundrohrs (51) geführten achsparallelen Drehsicherungsbolzen (66) versehen sind.

23. Nutzfahrzeug nach einem der Ansprüche 12 bis 22, <u>dadurch gekennzeichnet</u>, daß der Schlittenaufbau (7) mit dem Querträger (27') über schräg nach außen gestellte Teleskopstreben (68, 69) verbunden ist, deren kürzeste Einschublänge der Strebenlänge in der aufgezogenen Mittelstellung des Zwischenträgerrahmens (45) entspricht.

24. Nutzfahrzeug nach einem der Ansprüche 6 bis 23, <u>dadurch gekennzeichnet</u>, daß die Greiforgane (30) mit einer im wesentlichen vertikal stehenden, hinter dem Querträger nach innen ragenden Führungsplatte (71, 72) mit einem Verriegelungszapfen (73, 74) versehen sind, der zur mechanischen Sicherung in der aufgezogenen Fahrstellung in eine Aufnahme (75, 76) am vorderen Ende des Aufbaus eingreift.

25. Nutzfahrzeug nach einem der Ansprüche 6 bis 24, <u>gekennzeichnet durch</u> zur Seitenfixierung in den Schlittenaufbau (7) eingreifende Zentrierzapfen (78, 79) am vorderen Ende des Aufbaus.

26. Nutzfahrzeug nach einem der Ansprüche 1 bis 25, <u>dadurch gekennzeichnet</u>, daß der gegenüber dem Schieberahmen (5) verschmälerte Kipprahmen (3') beidends mit überstehenden Querachsen (80, 81) mit, die Schieberahmen-Längsstreben (42) abstützenden,Rollen (82) versehen ist.

27. Nutzfahrzeug nach Anspruch 26, _dadurch gekennzeichnet_, daß das hintere Ende des Kipprahmens (3') mit der zweiten innenliegenden Schwenkachse (13) zusammenfällt.

28. Nutzfahrzeug nach Anspruch 27, _gekennzeichnet durch_ eine hydraulische Seilzugeinzugsvorrichtung (83) für den Kipprahmen (3').

0188280

FIG. 1

FIG. 2

**FIG. 3**

**FIG. 4**

0188280

FIG. 5

FIG. 8

FIG. 6

FIG. 7

FIG. 9

0188280

FIG. 11

FIG. 10

0188280

0188280

FIG. 13

FIG. 12

0188280

FIG. 14

FIG. 15

FIG. 16

0188280

FIG. 17

FIG. 18

0188280

FIG. 19